# EUROPÄISCHE PATENTANMELDUNG

(11) **EP 3 156 133 A1**
(43) Veröffentlichungstag der Anmeldung: **19.04.2017**
(21) Anmeldenummer: 15189601.6
(22) Anmeldetag: 13.10.2015
(51) Int. Cl.: B03D 1/02, B03D 1/14, C02F 1/24, C22B 3/00

(54) **MIKROFLOTATIONSANLAGE UND VERFAHREN ZUM BETREIBEN EINER MIKROFLOTATIONSANLAGE**

(71) Anmelder: Damann, Roland, 33106 Paderborn (DE)
(72) Erfinder: Damann, Roland, 33106 Paderborn (DE)
(74) Vertreter: Hauck Patentanwaltspartnerschaft mbB

(57) **Zusammenfassung**

Mikroflotationsanlage mit
• einem Flotationsbecken,
• einem Schmutzwasserzulauf,
• einem Dispersionswasserzulauf, und
• einem Klarwasserauslauf, gekennzeichnet durch
• eine erste Kamera, die so angeordnet ist, dass sie ein Bild einer Flotatschicht der Mikroflotationsanlage erfasst, und
• eine elektronische Steuerung, die mit der ersten Kamera verbunden und dazu ausgebildet ist, auf Grundlage mindestens eines von der ersten Kamera zur Verfügung gestellten Bilds eine Bewertung eines Flotationsergebnisses zu erstellen.

## Beschreibung

Die Erfindung betrifft eine Mikroflotationsanlage mit einem Flotationsbecken, einem Schmutzwasserzulauf, einem Dispersionswasserzulauf und einem Klarwasserauslauf. Über den Dispersionswasserzulauf wird mit einem Gas angereichertes Dispersionswasser in das Flotationsbecken eingeleitet. Bei der Entspannung des Dispersionswassers bilden sich Mikroblasen, die langsam in dem Flotationsbecken aufsteigen, sich an Verunreinigungen anlagern und diese an die Oberfläche des Flotationsbeckens transportieren, wo sich eine sogenannte Flotatschicht bildet.

Soweit jetzt und im Folgenden von Schmutzwasser, Abwasser, Klarwasser und Dispersionswasser die Rede ist, sind andere Flüssigkeiten als Wasser ausdrücklich einbezogen, beispielweise Öle oder Gemische unterschiedlicher Flüssigkeiten mit und ohne Wasser.

Mikroflotationsanlagen sind zur Reinigung der unterschiedlichsten Abwässer geeignet und zeichnen sich durch einen weitgehend wartungsfreien und kostengünstigen Betrieb aus. Insbesondere erlauben sie eine hocheffiziente Abscheidung von Feststoffen aus Flüssigkeiten, beispielsweise bei der Aufbereitung industrieller, kommunaler oder biotechnologischer Abwässer. Bei der Mikroflotation können unterschiedliche Ziele angestrebt werden. In der Regel wird auf einen möglichst geringen Energieeinsatz, einen geringen Verschmutzungsgrad des Klarwassers und eine für eine einfache Weiterverarbeitung oder Entsorgung günstige Beschaffenheit des Flotats besonderer Wert gelegt. Da zahlreiche Faktoren die Erreichbarkeit dieser Ziele beeinflussen, sind optimale Flotationsergebnisse nicht immer einfach zu erreichen. Ein erfahrener Praktiker vor Ort ist jedoch häufig in der Lage, Verbesserungspotentiale zu erkennen und durch geeignete Eingriffe in die Anlagensteuerung zu realisieren. Aus dem US-Patent Nr. 5,693,222 ist bekannt geworden, eine Trübung des in einer Mikroflotationsanlage gereinigten Abwassers zu messen und bei starker Trübung ein Entspannungsventil automatisch so anzusteuern, dass mehr Gas zugeführt wird. Auf diese Weise wird ein optimales Gas-Feststoff-Verhältnis angestrebt.

Davon ausgehend ist es die Aufgabe der Erfindung, eine Mikroflotationsanlage zur Verfügung zu stellen, die auch unter wechselnden Betriebsbedingungen optimale Ergebnisse erzielt und einfacher betrieben werden kann, sowie ein entsprechendes Verfahren zum Betreiben einer Mikroflotationsanlage.

Diese Aufgabe wird gelöst durch die Mikroflotationsanlage mit den Merkmalen des Anspruchs 1. Vorteilhafte Ausgestaltungen sind in den sich anschließenden Unteransprüchen angegeben.

Die Mikroflotationsanlage hat
- ein Flotationsbecken,
- einen Schmutzwasserzulauf,
- einen Dispersionswasserzulauf,
- einen Klarwasserauslauf,
- eine erste Kamera, die so angeordnet ist, dass sie ein Bild einer Flotatschicht der Mikroflotationsanlage erfasst, und
- eine elektronische Steuerung, die mit der ersten Kamera verbunden und dazu ausgebildet ist, auf Grundlage mindestens eines von der ersten Kamera zur Verfügung gestellten Bilds eine Bewertung eines Flotationsergebnisses zu erstellen.

Über den Schmutzwasserzulauf wird dem Flotationsbecken Schmutzwasser (oder eine sonstige verunreinigte Flüssigkeit) und über den Dispersionswasserzulauf Dispersionswasser zugeführt. Das Dispersionswasser ist eine Flüssigkeit (insbesondere Wasser), die unter einem erhöhten Druck steht und in der ein Gas gelöst ist, im Idealfall mit einer Sättigungskonzentration. Das Gas kann insbesondere Luft sein. Auf dem Weg in das Flotationsbecken strömt das Dispersionswasser in der Regel durch ein Entspannungsventil, wobei der Druck im Wesentlichen bis auf den Umgebungsdruck absinkt, was zu der erwünschten Mikroblasenbildung führt. Für viele Anwendungen ist es von Vorteil, wenn die Mikroblasen zum Großteil Durchmesser im Bereich von etwa 20 µm bis etwa 50 µm aufweisen. Die Mikroblasen lagern sich an die Verunreinigungen, insbesondere kleine Feststoffpartikel, des Schmutzwassers an und tragen diese an die Oberfläche, wo sich eine Flotatschicht bildet. Über den Klarwasserauslauf kann die gereinigte Flüssigkeit, also das Klarwasser, aus dem Flotationsbecken entnommen werden. Das Klarwasser kann zur Herstellung des Dispersionswassers verwendet und in einem Drucksättiger mit einem Gas angereichert werden.

Bei der Erfindung stelle eine erste Kamera ein Bild einer Flotatschicht zur Verfügung, das von einer elektronischen Steuerung als Grundlage einer Bewertung eines Flotationsergebnisses verwendet wird. Dieses Vorgehen beruht auf der Erkenntnis, dass ein Fachmann durch visuelle Begutachtung der Flotatschicht wichtige Informationen über das Ergebnis des Flotationsprozesses gewinnen kann. Beispielsweise kann er einschätzen, ob ein Feststoffgehalt der Flotatschicht in einem erwünschten Bereich liegt oder ob die Flotatschicht die erwünschte Zusammensetzung aufweist, etwa einen angemessenen Gehalt eines Flockungsmittels. Die Erfindung macht sich diese Erkenntnis zunutze und ermöglicht ein automatisches Erstellen einer solchen Bewertung des Flotationsergebnisses mit Hilfe einer elektronischen Steuerung, die ein von der ersten Kamera zur Verfügung gestelltes Bild auswertet. Das Erstellen der Bewertung kann bei der Erfindung mit an sich bekannten Methoden der Bildverarbeitung erfolgen. Auf diese Weise kann eine aussagekräftige Bewertung des Flotationsergebnisses ohne einen versierten Fachmann erlangt werden.

Eine objektive Bewertung des Flotationsergebnisses ist alternativ mit speziellen Messverfahren möglich, die beispielsweise die Schlammdichte oder den Feststoffgehalt des Flotats messen. Hierzu müssen jedoch Proben entnommen werden und es entsteht ein erheblicher apparativer und zeitlicher Aufwand. Zeitnahe Korrekturen des Flotationsprozesses sind auf dieser Grundlage in der Praxis nicht möglich. Bei der Erfindung liegt eine zuverlässige Bewertung hingegen ohne spürbare Verzögerung vor und ohne dass Proben entnommen werden müssen. Dies ermöglicht eine fortlaufende Überwachung des Flotationsergebnisses.

In einer Ausgestaltung ist die elektronische Steuerung dazu ausgebildet, mindestens einen Betriebsparameter der Mikroflotationsanlage vorzugeben und in Abhängigkeit von der Bewertung zu verändern. Das Vorgeben und Verändern des Betriebsparameters kann insbesondere automatisch erfolgen, ohne dass manuelle Eingriffe erforderlich sind. Weicht die auf Grundlage eines Kamerabilds erstellte Bewertung des Flotationsergebnisses von einer Erwartung oder einem Sollwert ab, kann somit unmittelbar gegengesteuert werden. Hierzu kann die elektronische Steuerung Algorithmen aufweisen, die auf Grundlage einer Bewertung eine geeignete Anpassung des Betriebsparameters bestimmen. Deutet die Bewertung beispielsweise auf einen zu hohen Anteil eines Flockungsmittels in der Flotatschicht hin, kann die zugeführte Menge des Flockungsmittels automatisch reduziert werden. Beispiele für geeignete Betriebsparameter werden nachstehend insbesondere in Verbindung mit dem erfindungsgemäßen Verfahren näher erläutert.

In einer Ausgestaltung ist die elektronische Steuerung dazu ausgebildet, die Bewertung mit einem lernfähigen Algorithmus zu erstellen. Hintergrund dieser Lösung ist, dass die von der Kamera zur Verfügung gestellten Bilder von den Rahmen- und Betriebsbedingungen der Mikroflotationsanlage beeinflusst sind. Beispielsweise können spezielle Eigenschaften des aufzubereitenden Abwassers oder besondere Beleuchtungsverhältnisse das Erscheinungsbild der Flotatschicht beeinflussen, was das Erstellen einer Bewertung auf Grundlage des Bildes der Flotatschicht erschwert. Bei Verwendung eines lernfähigen Algorithmus kann eine automatische Anpassung an solche Betriebs- und Rahmenbedingungen erfolgen. Hierzu können beispielsweise Referenzbilder einer als optimal erkannten Flotatschicht oder einer Flotatschicht mit bestimmten Abweichungen von einem Idealzustand zum Vergleich herangezogen werden. Diese Referenzbilder können in der elektronischen Steuerung hinterlegt sein. Ebenfalls möglich ist es, Eigenschaften oder Referenzbewertungen einer von der ersten Kamera erfassten Flotatschicht zu ermitteln, beispielsweise durch Analyse entsprechender Proben, und die Ergebnisse ebenfalls zum Vergleich heranzuziehen. Solche Referenzbewertungen können ebenfalls in der elektronischen Steuerung hinterlegt werden. Die elektronische Steuerung kann eine Eingabemöglichkeit für Referenzbilder und/oder Referenzbewertungen aufweisen. Die Referenzbewertungen können insbesondere unabhängig von der ersten Kamera erstellt werden, beispielsweise durch Laboranalysen. Bei Verwendung eines geeigneten, lernfähigen Algorithmus können diese Referenzbilder oder -bewertungen in die Bewertung einfließen, sodass die automatisch erstellten Bewertungen des Flotationsergebnisses mit zunehmender Betriebszeit der Mikroflotationsanlage immer genauer werden können.

In einer Ausgestaltung weist die Mikroflotationsanlage eine zweite Kamera auf, die mit der elektronischen Steuerung verbunden und so angeordnet ist, dass sie ein Bild des über den Klarwasserauslauf abfließenden Klarwassers erfasst, und die elektronische Steuerung ist dazu ausgebildet, mindestens ein von der zweiten Kamera erfasstes Bild beim Erstellen der Bewertung zu berücksichtigen. Alternativ oder zusätzlich kann die Mikroflotationsanlage eine dritte Kamera aufweisen, die mit der elektronischen Steuerung verbunden und so angeordnet ist, dass sie ein Bild einer im Flotationsbecken befindlichen Sedimentschicht erfasst, wobei die elektronische Steuerung dazu ausgebildet ist, mindestens ein von der dritten Kamera erfasstes Bild beim Erstellen der Bewertung zu berücksichtigen. Mit der zweiten Kamera können alle visuell erfassbaren Eigenschaften des abfließenden Klarwassers aufgezeichnet werden, beispielsweise eine Trübung und/oder eine Färbung. Diese Informationen können dann in die Bewertung des Flotationsergebnisses einfließen. Mit der dritten Kamera können Eigenschaften der Sedimentschicht erfasst werden und ebenfalls in die Bewertung einfließen. Dies ermöglicht unter anderem das Festlegen optimaler Entleerungsphasen des Flotationsbeckens oder eine gezielte Ansteuerung eines Sedimenträumers.

Die erste Kamera und/oder die zweite Kamera und/oder die dritte Kamera können wasserdicht und/oder temperaturbeständig gekapselt sein. Sie können Bilder mit einer hohen Auflösung von beispielsweise einem Megapixel oder mehr zur Verfügung stellen.

In einer Ausgestaltung ist die elektronische Steuerung dazu ausgebildet, für die Bewertung eine Oberflächenstruktur der Flotatschicht und/oder eine Farbe der Flotatschicht und/oder eine Schaumbildung an der Oberfläche der Flotatschicht auszuwerten. Beispielsweise kann festgestellt werden, ob die Oberfläche der Flotatschicht glatt, wellig oder rissig ist. Eine Bewertung dieser Eigenschaften kann insbesondere auch quantitativ erfolgen, sodass aussagekräftige Rückschlüsse beispielsweise auf den Feststoffgehalt der Flotatschicht möglich werden. Beispielsweise kann eine Anzahl von Rissen pro Flächeneinheit, eine mittlere Breite und/oder Tiefe von Rissen, eine Länge oder Amplitude von Wellen, usw., bestimmt werden. Eine Auswertung der Farbe der Flotatschicht ist ebenfalls aussagekräftig, beispielsweise kann eine rötliche Farbe auf einen hohen Anteil an Eisen-III-Chlorid hinweisen. Eine der Auswertung auf Grundlage eines von der Kamera erfassten Bilds ebenfalls zugängliche Größe ist eine Schaumbildung an der Oberfläche der Flotatschicht. Schaumbildung auf der Anlagenoberfläche kann nicht nur im regulären Betrieb, sondern auch während einer Reinigung der Anlage auftreten. Dabei kann es zu einem Überschäumen des Flotationsbeckens kommen, was eine Verschmutzung von Anlagenteilen und des Hallenbodens nach sich zieht und gegebenenfalls eine aufwendige Reinigung erfordert.

In einer Ausgestaltung ist die erste Kamera, die zweite Kamera und/oder die dritte Kamera eine IR-Kamera. Grundsätzlich kann jede der genannten Kameras auch mit Licht aus dem sichtbaren Spektrum arbeiten. Eine Verwendung von Infrarotlicht oder anderen speziellen Spektralbereichen kann unter Umständen eine höhere Aussagekraft haben und/oder weniger vom einfallenden Tageslicht beeinflusst sein.

In einer Ausgestaltung ist die erste Kamera eine 3D-Kamera. Eine 3D-Kamera erfasst nicht nur ein zweidimensionales Bild, sondern liefert zusätzlich Tiefeninformationen zu jedem Bildpunkt. Hierzu sind unterschiedliche Kamerasysteme geeignet, beispielsweise Time-of-Flight-Kameras, Stereokameras oder Lichtfeldkameras. Die zusätzliche Verfügbarkeit einer Tiefeninformation kann eine objektive Bewertung insbesondere der Oberflächeneigenschaften der Flotatschicht vereinfachen und somit zu einer aussagekräftigeren Bewertung des Flotationsergebnisses führen.

Die oben genannte Aufgabe wird ebenfalls gelöst durch das Verfahren mit den Merkmalen des Anspruchs 8. Vorteilhafte Ausgestaltungen des Verfahrens sind in den sich anschließenden Unteransprüchen angegeben.

Das Verfahren dient zum Betreiben einer Mikroflotationsanlage und weist die folgenden Schritte auf:
- Zuführen von Dispersionswasser in ein Flotationsbecken,
- Vorgeben mindestens eines Betriebsparameters der Mikroflotationsanlage,
- Erfassen eines Bilds einer Flotatschicht mit einer ersten Kamera,
- Erstellen einer Bewertung eines Flotationsergebnisses auf Grundlage mindestens eines von der ersten Kamera erfassten Bilds mit einer elektronischen Steuerung,
- Anpassen mindestens eines Betriebsparameters der Mikroflotationsanlage in Abhängigkeit von der Bewertung.

Das Verfahren kann insbesondere zum Betreiben einer Mikroflotationsanlage mit den Merkmalen eines der Ansprüche 1 bis 7 eingesetzt werden. Zur Erläuterung der Merkmale und Vorteile des Verfahrens wird auf die vorstehenden Erläuterungen der Mikroflotationsanlage verwiesen, die entsprechend gelten. Insbesondere kann jedes der im Zusammenhang mit der Mikroflotationsanlage erläuterten Merkmale mit dem Verfahren kombiniert werden.

In einer Ausgestaltung des Verfahrens wird das Vorgeben und Anpassen des mindestens einen Betriebsparameters von der elektronischen Steuerung ausgeführt. Grundsätzlich können diese Schritte auch manuell ausgeführt werden, um auf die von der elektronischen Steuerung automatisch erstellte Bewertung des Flotationsergebnisses in angemessener Weise zu reagieren. Ein automatisches Vorgeben und Anpassen des mindestens einen Betriebsparameters durch die elektronische Steuerung ermöglicht eine weitergehende Automatisierung, wie im Zusammenhang mit der Mikroflotationsanlage bereits erläutert.

In einer Ausgestaltung weist das Verfahren einen oder mehrere der folgenden weiteren Schritte auf:
- Erfassen mindestens eines Bilds von aus einem Klarwasserauslauf abfließendem Klarwasser mit einer zweiten Kamera und Berücksichtigen des mindestens einen von der zweiten Kamera erfassten Bilds beim Erstellen der Bewertung,
- Erfassen mindestens eines Bilds einer im Flotationsbecken befindlichen Sedimentschicht mit einer dritten Kamera und Berücksichtigen des mindestens einen von der dritten Kamera erfassten Bilds beim Erstellen der Bewertung.

Hierzu wird auf die Erläuterungen zur zweiten und dritten Kamera im Zusammenhang mit der Mikroflotationsanlage verwiesen.

In einer Ausgestaltung weist das Verfahren den folgenden, weiteren Schritt auf:
• Anpassen eines zur Erstellung der Bewertung verwendeten Algorithmus unter Berücksichtigung mindestens einer Referenzbewertung und/oder mindestens eines Referenzbilds.

Es wird also ein lernfähiger Algorithmus verwendet, wie zuvor im Zusammenhang mit der Mikroflotationsanlage bereits beschrieben. Die Referenzbewertung bezieht sich wiederum auf eine unabhängig von der Kamera bzw. den Kameras erstellte Bewertung eines Flotationsergebnisses.

In einer Ausgestaltung wird bei der Bewertung eine Oberflächenstruktur der Flotatschicht und/oder eine Farbe der Flotatschicht und/oder eine Schaumbildung an der Oberfläche der Flotatschicht ausgewertet. Diese Maßnahmen wurden bereits im Zusammenhang mit der Mikroflotationsanlage erläutert.

In einer Ausgestaltung umfasst der mindestens eine Betriebsparameter eine oder mehrere der folgenden Größen:
- Menge eines von einem Klarwasserauslauf in das Flotationsbecken zurückgeführten Klarwassers,
- eine Laufzeit und/oder eine Geschwindigkeit eines Flotaträumers,
- eine Laufzeit und/oder eine Geschwindigkeit eines Sedimenträumers,
- Menge eines in das Flotationsbecken einzugebenden Schaumzerstörers,
- einen Betriebsdruck eines Drucksättigers,
- eine Anzahl von betriebenen Drucksättigern,
- eine Ventilstellung eines Entspannungsventils,
- eine Anzahl von betriebenen Entspannungsventilen,
- eine Luftmenge, die zur Herstellung von Dispersionswasser eingesetzt wird,
- eine Mikroblasengrößenverteilung.

Jeder der genannten Betriebsparameter hat Einfluss auf das Flotationsergebnis. Die Menge des von einem Klarwasserauslauf in das Flotationsbecken zurückgeführten Klarwassers wird auch als Recyclestrom bezeichnet. Sie beeinflusst die Konzentration der im Flotationsbecken enthaltenen Verunreinigungen. Die Laufzeit und/oder Geschwindigkeit eines Flotaträumers bzw. eines Sedimenträumers hat ebenfalls Einfluss auf das Flotationsergebnis, insbesondere auf die Beschaffenheit des entnommenen Flotats bzw. Sediments. Ein weiterer Betriebsparameter ist die Menge eines zuzugebenden Schaumzerstörers. Durch Zugeben eines insbesondere chemischen Schaumzerstörers in das Flotationsbecken kann einer Schaumbildung entgegengewirkt werden, insbesondere um ein Überschäumen zu vermeiden. Die übrigen, vorstehend aufgezählten Betriebsparameter haben maßgeblichen Einfluss auf die Mikroblasenbildung, wobei insbesondere die Anzahl und die Größen der Mikroblasen für das Flotationsergebnis von großer Bedeutung sind. Die Mikroblasengrößenverteilung, also die relative Anzahl von Mikroblasen mit einer bestimmten Größe, kann bei modernen Mikroflotationsanlagen ebenfalls als Betriebsparameter verstanden werden. Insbesondere ist es möglich, die Mikroblasengrößenverteilung während des Betriebs der Mikroflotationsanlage zu messen und gezielt zu beeinflussen. Hierzu kann beispielsweise eine geeignete Messeinrichtung im Dispersionswasserzulauf, stromabwärts eines Entspannungsventils, angeordnet werden, beispielsweise ein zu diesem Zweck angepasstes Partikelgrößenmessgerät. Einzelheiten hierzu sind in der europäischen Patentanmeldung mit dem amtlichen Aktenzeichen Nr. 15 150 884.3 erläutert.

Die oben genannte Aufgabe wird ebenfalls gelöst durch den Nachrüstsatz mit den Merkmalen des Anspruchs 14. Vorteilhafte Ausgestaltungen des Verfahrens sind in dem sich anschließenden Unteranspruch angegeben.

Der Nachrüstsatz ist zur Nachrüstung einer Mikroflotationsanlage bestimmt, die ein Flotationsbecken, einen Schmutzwasserzulauf, einen Dispersionswasserzulauf und einen Klarwasserauslauf aufweist, wobei der Nachrüstsatz folgendes umfasst:
- eine erste Kamera, die so angeordnet ist, dass sie ein Bild einer Flotatschicht der Mikroflotationsanlage erfasst, und
- eine elektronische Steuerung, die mit der ersten Kamera verbindbar und dazu ausgebildet ist, auf Grundlage mindestens eines von der ersten Kamera zur Verfügung gestellten Bilds eine Bewertung eines Flotationsergebnisses zu erstellen.

Mit dem erfindungsgemäßen Nachrüstsatz kann eine herkömmliche Mikroflotationsanlage in eine erfindungsgemäße Mikroflotationsanlage verwandelt werden. Die elektronische Steuerung kann eine eigenständige Hardware aufweisen, die gegebenenfalls mit einer vorhandenen Steuerung der nachzurüstenden Mikroflotationsanlage zusammenwirkt oder diese ersetzt. Alternativ kann die elektronische Steuerung im Wesentlichen in Form von Software realisiert sein, die auf einer vorhandenen Steuerung installiert wird. Wesentliches Element der elektronischen Steuerung des Nachrüstsatzes ist die Fähigkeit, gegebenenfalls in Verbindung mit einer vorhandenen Steuerung, eine Bewertung des Flotationsergebnisses auf Grundlage des von der ersten Kamera zur Verfügung gestellten Bilds zu erstellen.

In einer Ausgestaltung weist der Nachrüstsatz eines oder mehrere der in den Ansprüchen 1 bis 7 genannten weiteren Merkmale auf. Damit ist gemeint, dass einzelne der im Anspruch 1 genannten Elemente der Mikroflotationsanlage Teil des Nachrüstsatzes sein können, dass die elektronische Steuerung des Nachrüstsatzes so ausgebildet sein kann, wie in den Unteransprüchen 2, 3 oder 5 angegeben, dass der Nachrüstsatz eine zweite und/oder eine dritte Kamera aufweisen kann, wie im Anspruch 4 angegeben, oder dass die Kameras ausgestaltet sein können, wie in den Unteransprüchen 6 und/oder 7 angegeben.

Die Erfindung wird nachfolgend anhand eines in einer Figur dargestellten Ausführungsbeispiels näher erläutert.

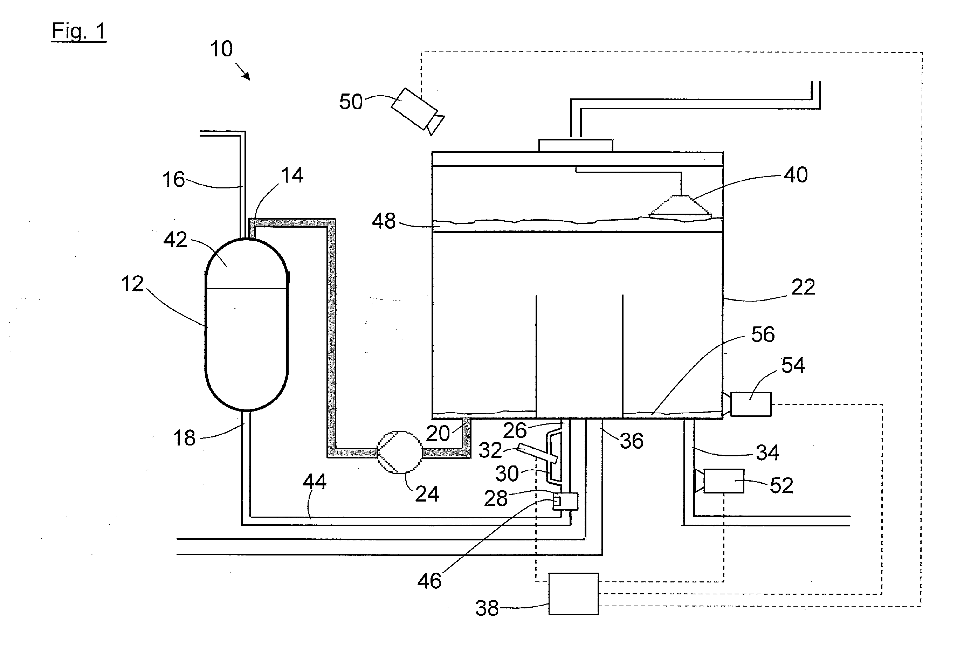

- Fig. 1: zeigt eine erfindungsgemäße Mikroflotationsanlage in einer schematischen Darstellung.

Die Mikroflotationsanlage 10 in Figur 1 weist einen Reaktorbehälter 12 auf, dem über einen Wasserzulauf 14 Wasser zugeführt wird. Über eine Gasleitung 16 wird dem Reaktorbehälter 12 außerdem ein Gas, insbesondere Luft, zugeführt. In dem Reaktorbehälter 12, der unter einem erhöhten Druck steht, beispielsweise im Bereich von 1,5 bar bis 4 bar, wird das Gas mit dem Wasser gemischt, sodass sich das Gas in dem Wasser löst. Aus diesem Grund kann der Reaktorbehälter 12 auch als Drucksättiger bezeichnet werden. Oberhalb des angedeuteten Wasserspiegels befindet sich ein Gaspolster 42. Das im Idealfall mit dem Gas gesättigte Wasser wird als Dispersionswasser bezeichnet und kann dem Reaktorbehälter 12 über den Dispersionswasserauslauf 18 entnommen werden.

Der Wasserzulauf 14 ist über eine Leitung mit einem Klarwasserauslauf 20 eines Flotationsbeckens 22 der Mikroflotationsanlage 10 verbunden. In der Leitung ist eine Pumpe 24 angeordnet. Das Flotationsbecken 22 weist außerdem einen Dispersionswasserzulauf 26 auf, der über eine Dispersionswasserzuleitung 44, in der ein Entspannungsventil 28 angeordnet ist, mit dem Dispersionswasserauslauf 18 des Reaktorbehälters 12 verbunden ist. Auf diese Weise wird das Dispersionswasser dem Flotationsbecken 22 zugeführt.

Beim Durchströmen des Entspannungsventils 28 kommt es zu einer Druckentspannung und infolgedessen zu einer Bildung von Mikroblasen, die in dem Flotationsbecken 22 langsam aufsteigen, sich dabei an Verunreinigungen anlagern und diese an die Oberfläche tragen. Dort wird die sich auf diese Weise bildende Flotatschicht 48 von einem Flotaträumer 40 abgesaugt.

Das zu reinigende Schmutzwasser wird dem Flotationsbecken 22 über einen Schmutzwasserzulauf 36 zugeführt. Das gereinigte Abwasser kann dem Flotationsbecken 22 über den weiteren Klarwasserauslauf 34 zur weiteren Verwendung entnommen werden.

Stromabwärts des Entspannungsventils 28 ist eine Messeinrichtung 32 zur Erfassung einer Größenverteilung der erzeugten Gasblasen angeordnet. Die Messeinrichtung 32 weist einen nicht dargestellten Partikelzähler auf, der die Größenverteilung der Gasblasen mittels Laserbeugung erfasst.

Die Messeinrichtung 32 ist in einer Abzweigleitung 30 angeordnet, die stromabwärts des Entspannungsventils 28 von der Dispersionswasserzuleitung 44 abzweigt. Stromabwärts der Messeinrichtung 32 wird die Abzweigleitung 30 wieder mit der Dispersionswasserzuleitung 44, die zwischen den beiden Verbindungspunkten mit der Abzweigleitung einen Hauptstrom des Dispersionswassers führt, vereint. Teilstrom und Hauptstrom des Dispersionswassers werden über den Dispersionswasserzulauf 26 in das Flotationsbecken 22 eingeleitet.

Die Messeinrichtung 32 ist mit einer elektronischen Steuerung 38 verbunden, wie durch eine gestrichelte Linie angedeutet. Die Entspannungsventilanordnung 28 weist eine Verstelleinrichtung 46 auf, die ebenfalls mit der elektronischen Steuerung 38 verbunden ist.

Die elektronische Steuerung 38 ist dazu ausgebildet, die Durchflussmenge der Entspannungsventilanordnung 28 in Abhängigkeit einer von der Messeinrichtung 32 erfassten Größenverteilung der Gasblasen einzustellen. Auf diese Weise kann die elektronische Steuerung 38 unter anderem den Betriebsparameter "Mikroblasengrößenverteilung" vorgeben und auf Grundlage einer Bewertung eines Flotationsergebnisses anpassen.

Oberhalb des Flotationsbeckens 22 ist eine erste Kamera 50 angeordnet, die so ausgerichtet ist, dass sie ein Bild der Flotatschicht 48 erfasst. Diese erste Kamera 50 ist mit der elektronischen Steuerung 38 verbunden, wie durch eine weitere gestrichelte Linie angedeutet. Die elektronische Steuerung 38 ist dazu ausgebildet, auf Grundlage des von der ersten Kamera 50 erfassten Bilds eine Bewertung des Flotationsergebnisses vorzunehmen. Beispielsweise können Risse in der Oberfläche der Flotatschicht 48 erkannt werden und auf ein zu trockenes Flotat hindeuten. In ähnlicher Weise kann eine besonders glatte Oberfläche der Flotatschicht 48 auf einen zu geringen Feststoffanteil des Flotats hindeuten.

Weicht die von der elektronischen Steuerung 38 erstellte Bewertung von einem angestrebten Zustand ab, kann die elektronische Steuerung 38 automatisch einen oder mehrere Betriebsparameter der Mikroflotationsanlage 10 abweichend von einer vorherigen Vorgabe anpassen, bis ein optimales Flotationsergebnis erzielt wird.

Am Klarwasserauslauf 34 ist eine zweite Kamera 52 angeordnet, die ein Bild des über den Klarwasserauslauf 34 abfließenden Klarwassers erfasst. Die zweite Kamera 52 ist ebenfalls mit der elektronischen Steuerung 38 verbunden, wie durch eine weitere gestrichelte Linie angedeutet. Die elektronische Steuerung 38 berücksichtigt beim Erstellen der Bewertung mindestens ein von der zweiten Kamera 52 erfasstes Bild.

In einem unteren Bereich des Flotationsbeckens 22 ist eine dritte Kamera 54 angeordnet, die ein Bild einer Sedimentschicht 52 erfasst. Die dritte Kamera 54 ist ebenfalls mit der elektronischen Steuerung 38 verbunden, wie durch eine weitere gestrichelte Linie angedeutet. Die elektronische Steuerung berücksichtigt beim Erstellen der Bewertung auch mindestens ein Bild der dritten Kamera 54.

### Liste der verwendeten Bezugszeichen

- 10: Mikroflotationsanlage
- 12: Reaktorbehälter
- 14: Wasserzulauf
- 16: Gasleitung
- 18: Dispersionswasserauslauf
- 20: Klarwasserauslauf
- 22: Flotationsbecken
- 24: Pumpe
- 26: Dispersionswasserzulauf
- 28: Entspannungsventil
- 30: Abzweigleitung
- 32: Messeinrichtung
- 34: Schmutzwasserzulauf
- 36: Klarwasserauslauf
- 38: elektronische Steuerung
- 40: Flotaträumer
- 42: Gaspolster
- 44: Dispersionswasserzuleitung
- 46: Verstelleinrichtung
- 48: Flotatschicht
- 50: erste Kamera
- 52: zweite Kamera
- 54: dritte Kamera
- 56: Sedimentschicht

## Patentansprüche

1. Mikroflotationsanlage (10) mit
• einem Flotationsbecken (22),
• einem Schmutzwasserzulauf (34),
• einem Dispersionswasserzulauf (26), und
• einem Klarwasserauslauf (36), **gekennzeichnet durch**
• eine erste Kamera (50), die so angeordnet ist, dass sie ein Bild einer Flotatschicht (48) der Mikroflotationsanlage (10) erfasst, und
• eine elektronische Steuerung (38), die mit der ersten Kamera (50) verbunden und dazu ausgebildet ist, auf Grundlage mindestens eines von der ersten Kamera (50) zur Verfügung gestellten Bilds eine Bewertung eines Flotationsergebnisses zu erstellen.

2. Mikroflotationsanlage (10) nach Anspruch 1, **dadurch gekennzeichnet, dass** die elektronische Steuerung (38) dazu ausgebildet ist, mindestens einen Betriebsparameter der Mikroflotationsanlage (10) vorzugeben und in Abhängigkeit von der Bewertung zu verändern.

3. Mikroflotationsanlage (10) nach Anspruch 1, **dadurch gekennzeichnet, dass** die elektronische Steuerung (38) dazu ausgebildet ist, die Bewertung mit einem lernfähigen Algorithmus zu erstellen.

4. Mikroflotationsanlage (10) nach einem der Ansprüche 1 bis 3, **dadurch gekennzeichnet, dass** die Mikroflotationsanlage (10) eine zweite Kamera (52) aufweist, die mit der elektronischen Steuerung (38) verbunden und so angeordnet ist, dass sie ein Bild des über den Klarwasserauslauf (34) abfließenden Klarwassers erfasst, und dass die elektronische Steuerung (38) dazu ausgebildet ist, mindestens ein von der zweiten Kamera (52) erfasstes Bild beim Erstellen der Bewertung zu berücksichtigen, und/oder dadurch, dass die Mikroflotationsanlage (10) eine dritte Kamera (54) aufweist, die mit der elektronischen Steuerung (38) verbunden und so angeordnet ist, dass sie ein Bild einer im Flotationsbecken (22) befindlichen Sedimentschicht (56) erfasst, und dass die elektronische Steuerung (38) dazu ausgebildet ist, mindestens ein von der dritten Kamera (54) erfasstes Bild beim Erstellen der Bewertung zu berücksichtigen.

5. Mikroflotationsanlage (10) nach einem der Ansprüche 1 bis 4, **dadurch gekennzeichnet, dass** die elektronische Steuerung (38) dazu ausgebildet ist, für die Bewertung eine Oberflächenstruktur der Flotatschicht (48) und/oder eine Farbe der Flotatschicht (48) und/oder eine Schaumbildung an der Oberfläche der Flotatschicht (48) auszuwerten.

6. Mikroflotationsanlage (10) nach einem der Ansprüche 1 bis 5, **dadurch gekennzeichnet, dass** die erste Kamera (50), die zweite Kamera (52) und/oder die dritte Kamera (54) eine IR-Kamera ist.

7. Mikroflotationsanlage (10) nach einem der Ansprüche 1 bis 6, **dadurch gekennzeichnet, dass** die erste Kamera (50) eine 3D-Kamera ist.

8. Verfahren zum Betreiben einer Mikroflotationsanlage (10), insbesondere einer Mikroflotationsanlage (10) mit den Merkmalen eines oder mehrerer der Ansprüche 1 bis 7, mit den folgenden Schritten:
• Zuführen von Dispersionswasser in ein Flotationsbecken (22),
• Vorgeben mindestens eines Betriebsparameters der Mikroflotationsanlage (10),
• Erfassen eines Bilds einer Flotatschicht (48) mit einer ersten Kamera (50),
• Erstellen einer Bewertung eines Flotationsergebnisses auf Grundlage mindestens eines von der ersten Kamera (50) erfassten Bilds mit einer elektronischen Steuerung (38),
• Anpassen mindestens eines Betriebsparameters der Mikroflotationsanlage (10) in Abhängigkeit von der Bewertung.

9. Verfahren nach Anspruch 8, **dadurch gekennzeichnet, dass** das Vorgeben und Anpassen des mindestens einen Betriebsparameters von der elektronischen Steuerung (38) ausgeführt wird.

10. Verfahren nach Anspruch 8 oder 9, **gekennzeichnet durch** einen oder mehrere der folgenden weiteren Schritte:
• Erfassen mindestens eines Bilds von aus einem Klarwasserauslauf (34) abfließendem Klarwasser mit einer zweiten Kamera (52) und Berücksichtigen des mindestens einen von der zweiten Kamera (52) erfassten Bilds beim Erstellen der Bewertung,
• Erfassen mindestens eines Bilds einer im Flotationsbecken (22) befindlichen Sedimentschicht (56) mit einer dritten Kamera (54) und Berücksichtigen des mindestens einen von der dritten Kamera (54) erfassten Bilds beim Erstellen der Bewertung.

11. Verfahren nach einem der Ansprüche 8 bis 10, **gekennzeichnet durch** den weiteren Schritt:
• Anpassen eines zur Erstellung der Bewertung verwendeten Algorithmus unter Berücksichtigung mindestens einer Referenzbewertung und/oder mindestens eines Referenzbilds.

12. Verfahren nach einem der Ansprüche 8 bis 11, **dadurch gekennzeichnet, dass** bei der Bewertung eine Oberflächenstruktur der Flotatschicht (48) und/oder eine Farbe der Flotatschicht (48) und/oder eine Schaumbildung an der Oberfläche der Flotatschicht (48) ausgewertet wird.

13. Verfahren nach einem der Ansprüche 8 bis 12, **dadurch gekennzeichnet, dass** der mindestens eine Betriebsparameter eine oder mehrere der folgenden Größen umfasst:
• Menge eines von einem Klarwasserauslauf (20) in das Flotationsbecken (22) zurückgeführten Klarwassers,
• eine Laufzeit und/oder eine Geschwindigkeit eines Flotaträumers (40),
• eine Laufzeit und/oder eine Geschwindigkeit eines Sedimenträumers,
• Menge eines in das Flotationsbecken einzugebenden Schaumzerstörers,
• einen Betriebsdruck eines Drucksättigers,
• eine Anzahl von betriebenen Drucksättigern,
• eine Ventilstellung eines Entspannungsventils (28),
• eine Anzahl von betriebenen Entspannungsventilen (28),
• eine Luftmenge, die zur Herstellung von Dispersionswasser eingesetzt wird,
• eine Mikroblasengrößenverteilung.

14. Nachrüstsatz für eine Mikroflotationsanlage (10), die ein Flotationsbecken (22), einen Schmutzwasserzulauf (34), einen Dispersionswasserzulauf (26) und einen Klarwasserauslauf (36) aufweist, wobei der Nachrüstsatz folgendes umfasst:
• eine erste Kamera (50), die so angeordnet ist, dass sie ein Bild einer Flotatschicht (48) der Mikroflotationsanlage (10) erfasst, und
• eine elektronische Steuerung (38), die mit der ersten Kamera (50) verbindbar und dazu ausgebildet ist, auf Grundlage mindestens eines von der ersten Kamera (50) zur Verfügung gestellten Bilds eine Bewertung eines Flotationsergebnisses zu erstellen.

15. Nachrüstsatz nach Anspruch 14, **gekennzeichnet durch** eines oder mehrere der in den Ansprüchen 1 bis 7 genannten weiteren Merkmale.
